(19) Europäisches Patentamt

European Patent Office

Office européen des brevets

(11) **EP 2 482 600 B1**

(12) **EUROPEAN PATENT SPECIFICATION**

(45) Date of publication and mention
of the grant of the patent:
**09.01.2019 Bulletin 2019/02**

(21) Application number: **10788845.5**

(22) Date of filing: **01.06.2010**

(51) Int Cl.:
***H04W 16/10*** *(2009.01)*

(86) International application number:
**PCT/CN2010/073438**

(87) International publication number:
**WO 2010/145449 (23.12.2010 Gazette 2010/51)**

(54) **METHOD AND DEVICE FOR ALLOCATING BASE STATION AVAILABLE RESOURCES**

VERFAHREN UND VORRICHTUNG FÜR DIE ZUWEISUNG VON VERFÜGBAREN RESSOURCEN
EINER BASISSTATION

PROCÉDÉ ET DISPOSITIF D AFFECTATION DE RESSOURCES DISPONIBLES À UNE STATION
DE BASE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.09.2009 CN 200910093461**

(43) Date of publication of application:
**01.08.2012 Bulletin 2012/31**

(73) Proprietor: **ZTE Corporation**
**Shenzhen, Guangdong 518057 (CN)**

(72) Inventor: **HUANG, He**
**Shenzhen**
**Guangdong 518057 (CN)**

(74) Representative: **Gervasi, Gemma et al**
**Notarbartolo & Gervasi S.p.A.**
**Corso di Porta Vittoria 9**
**20122 Milano (IT)**

(56) References cited:
**EP-A1- 1 780 959          EP-A2- 1 976 143
CN-A- 101 416 553          CN-A- 101 534 559
US-A1- 2008 259 863**

**Description**

Technical Field

The present invention relates to the field of mobile communication, and more particularly, to a method and a device for allocating channels and a method for allocating available resources of a base station.

Background of the Related Art

In the mobile communication system, a base station is a device providing services for cells. In general, a base station can send data to mobile terminals in one or more cells covered by the base station via the downlink, and receive data uploaded by the terminals in the covered cells via the uplink. During data exchange between the base station and the terminals, the base station needs to perform various processing procedures, for example, the base station is required to allocate wireless resources occupied by data exchange, and process data either sent to or received from the terminals.

Whether data is transmitted or data is processed, available resources on the base station are occupied. For example, the energy of the base station will be consumed when the data is sent or received, the transmission of the data will occupy limited wireless resources on the base station, and the processing of the data needs to occupy CPU resources of the base station.

However, an efficient solution to how to manage these available resources such that the base station can transfer the available resources with an efficiency as high as possible and provide more efficient services for a plurality of cells covered by the base station has not yet been proposed so far.

For example, in the Wideband Code-Division Plurality of Access (WCDMA) system, the technology of High Speed Downlink Packet Access (HSDPA) is usually used. This technology is able to transmit data in the downlink direction via the High Speed Physical Downlink Shared Channel (HS-PDSCH). The HS-PDSCH constantly uses a codeword with Spreading Factor (SF) being 16, and there are at most 15 HS-PDSCHs in a cell.

NodeB (a base station in WCDMA) can determine, based on a certain scheduling strategy, that data of different User Equipment (UE) is transmitted on the HS-PDSCH and total HS-PDSCH resources available to each cell depends on hardware resources configured by the NodeB. If downlink HSDPA data throughput of a cell is less than data throughput that may be carried by HS-PDSCHs available to the cell, it is shown that some of the HS-PDSCHs of the cell are not fully utilized, that is, some of the hardware resources are wasted. For a number of cells supporting HSDPA services under the same NodeB, the phenomenon that the number of HS-PDSCHs in cells with higher traffic may not satisfy the requirement of downlink data throughput of the cell and the number of HS-PDSCHs in cells with lower traffic may not be fully utilized often occurs, the existence of such a phenomenon obviously will cause utilization radio of the available HS-PDSCH resources of the base station to fail to reach the maximum, resulting in waste of resources. Moreover, the similar problem exists in power of the base station, CPU resources, etc.

An efficient solution to the problem of waste of available resources (such as HS-PDSCH resources) of a base station due to inability to allocate reasonably the available resources on the base station in the related art has not been proposed yet so far.

A document US 2008/259863 A1(Zhang et al), which relates to HS-PDSCH allocation techniques, is a relevant prior art.

Content of the Invention

For the problem of waste of available resources (such as High Speed Physical Downlink Shared Channel resources) on a base station due to inability to allocate reasonably the available resources on the base station in the related art, the present invention provides a method and a device for allocating channels and a method for allocating available resources of the base station as defined in the attached independent claims, so as to address at least one of the aforementioned problems.

The technical scheme of the present invention is implemented as follows.

According to the present invention, a method for allocating channels is provided for allocating High Speed Physical Downlink Shared Channels to a plurality of cells under the same base station.

The method for allocating channels in accordance with the present invention comprises:
determining the minimum number of channels required by each cell of the plurality of cells in the case that the sum of the minimum numbers of channels required by the plurality of cells is less than the number of available channels of the base station; determining the number of adjustable channels pre-allocated to each cell to be allocated in the remaining channels based on the ratio of throughput of the cell to be allocated to the sum of throughputs of all the cells to be allocated, wherein the cell to be allocated refers to a cell in which the number of adjustable channels is undetermined; for each cell, determining the smaller one of the sum of the minimum number of channels required and the number of the adjustable channels of the cell, and the maximum number of channels required by the cell to be the number of actual channels to be allocated to the cell.

Determining the number of the adjustable channels of each cell to be allocated specifically comprises: ordering the plurality of cells in a descending order of guaranteed bit rate of the plurality of cells, and determining one by one the number of the adjustable channels of each cell to be allocated according to the order of the plurality of cells.

Specifically, the sum of the minimum number of the channels required and the number of the adjustable channels of each cell to be allocated may be determined one by one according to the following formula:

$$MaxHsNum_i = MinHsNum_i + ceil(HsNum \times \frac{HsUserNum_i}{\sum_{j=i}^{N} HsUserNum_j}),$$

where $MaxHsNum_i$ is the sum of the minimum number of channels required and the number of adjustable channels of the $i^{th}$ cell of the plurality of cells, Ceil is a round up function, $MinHsNum_i$ is the minimum number of channels required by the $i^{th}$ cell, $HsUserNum_i$ is the number of users of the High Speed Physical Downlink Shared Channels in the $i^{th}$ cell, $HsNum$ is the number of channels which are not pre-allocated presently in the remaining channels under the base station, and $N$ is the total number of the plurality of cells, $j = i,...,N$.

Additionally, the sum of the minimum number of the channels required and the number of the adjustable channels of each cell to be allocated may be determined one by one according to the following formula:

$$MaxHsNum_i = MinHsNum_i + ceil(HsNum \times \frac{HsGBR_i}{\sum_{j=i}^{N} HsGBR_j}),$$

where $MaxHsNum_i$ is the sum of the minimum number of channels required and the number of the adjustable channels of the $i^{th}$ cell of the plurality of cells, Ceil is a round up function, $MinHsNum_i$ is the minimum number of channels required by the $i^{th}$ cell, $HsNum$ is the number of the channels which are not pre-allocated presently in the remaining channels under the base station, $HsGBR_i$ is guaranteed bit rate of the $i^{th}$ cell, and $N$ is the total number of the plurality of cells, $j = i,...,N$.

Moreover, in the case that the number of the available channels of the base station is greater than the number of actual channels of the plurality of cells, the method further comprises: allocating the remaining channels in turn, starting from the first cell, to all or some of the plurality of cells according to the order of the plurality of cells, and after allocation to the last cell is completed, if there are still unallocated channels, continuing to allocate the channels to the first cell of the ordered cells, until all the remaining channels have been allocated, wherein the number of the channels allocated to each cell at a time is one.

In addition, when the plurality of cells are ordered, cells with the same guaranteed bit rate may be further ordered according to at least one of the maximum bit rate of the cell, the minimum number of channels required by the cell, the maximum number of channels required by the cell.

According to the present invention, a device for allocating channels is provided. The device may be located in a base station and configured to allocate High Speed Physical Downlink Shared Channels to a plurality of cells under the base station.

The device for allocating channels in accordant with the present invention comprises: a first determining module configured to determine the minimum number of channels required by each cell of the plurality of cells in the case that the sum of the minimum numbers of channels required by the plurality of cells is less than the number of available channels of the base station; a second determining module configured to determine the number of adjustable channels pre-allocated to each cell to be allocated in the remaining channels based on the ratio of throughput of the cell to be allocated to the sum of throughputs of all the cells to be allocated, wherein the cell to be allocated refers to a cell in which the number of adjustable channels is undetermined; and a third determining module configured to, for each cell, determine the smaller one of the sum of the minimum number of channels required and the number of the adjustable channels of the cell, and the maximum number of channels required by the cell to be the number of actual channels to be allocated to the cell.

According to the present invention, a method for allocating available resources of a base station is provided for allocating the available resources to a plurality of cells under the same base station.

The method comprise: determining the minimum amount of resources required by each cell of the plurality of cells in the case that the sum of the minimum amounts of resources required by the plurality of cells is less than the amount of available resources of the base station; determining the amount of adjustable resources pre-allocated to each cell to be allocated in the remaining resources based on the ratio of throughput of the cell to be allocated and the sum of throughputs of all the cells to be allocated, wherein the cell to be allocated refers to a cell in which the amount of adjustable resources is undetermined; for each cell, determining the smaller one of the sum of the minimum amount of resources required and the amount of the adjustable resources of the cell, and the maximum amount of the resources required by the cell to be the amount of actual resources to be allocated to the cell.

Determining the amount of the adjustable resources of each cell to be allocated specifically comprises: ordering the plurality of cells in a descending order of guaranteed bit rate of the plurality of cells, and determining one by one the amount of the adjustable resources of each cell to be allocated according to the order of the plurality of cells.

Specifically, the sum of the amount of the adjustable resources and the minimum amount of the resources required of each cell to be allocated may be determined one by one according to the following formula:

$$MaxRsource_i = MinRsource_i + ceil(Resource \times \frac{HsUserNum_i}{\sum_{j=i}^{N} HsUserNum_j}),$$

where $MaxResotirce_i$ is the sum of the amount of adjustable resources and the minimum amount of resources required of the $i^{th}$ cell of the plurality of cells, Ceil is a round up function, $MinResource_i$ is the minimum amount of resources required by the $i^{th}$ cell, $Resource$ is the amount of resources which are not pre-allocated presently in the remaining resources under the base station, $HsUserNum_i$ is the number of users needing to use the available resources of the base station in the $i^{th}$ cell, and $N$ is the total number of the plurality of cells, $j = i,...,N$.

Specifically, the sum of the amount of the adjustable resources and the minimum amount of the resources required of each cell may be determined one by one according to the following formula:

$$MaxRsource_i = MinRsource_i + ceil(Resource \times \frac{HsGBR_i}{\sum_{j=i}^{N} HsGBR_j}),$$

where $MaxResource_i$ is the sum of the amount of adjustable resources and the minimum amount of resources required of the $i^{th}$ cell of the plurality of cells, Ceil is a round up function, $MinResource_i$ is the minimum amount of resources required by the $i^{th}$ cell, $Resource$ is the amount of resources which are not pre-allocated presently in the remaining resources under the base station, $HsGBR_i$ is guaranteed bit rate of the $i^{th}$ cell, and $N$ is the total number of the plurality of cells, $j = i,...,N$.

Preferably, the available resources of the base station include one of downlink transmission power resources, CPU processing resources, memory resources, and channel element resources.

The present invention allocates resources to cells based on the minimum amount of resources required by the cells under the base station, and allocates the remaining resources to each cell based on throughput of the cell such that the available resources of the base station can be allocated more reasonably, thereby improving the utilization radio of resources and avoiding the problem of low utilization radio of resources due to insufficient allocation of resources in the related art.

Brief Description of Drawings

FIG. 1 is a flow chart of a method for allocating available resources of a base station in accordance with an embodiment of the present invention;

FIG. 2 is a flow chart of a method for allocating channels in accordance with an embodiment of the present invention;

FIG. 3 is a detail processing flow chart of a method for allocating channels in accordance with an embodiment of the present invention; and

FIG. 4 is a block diagram of a device for allocating channels in accordance with an embodiment of the present invention.

Preferred Embodiments of the Present Invention

For the problem of waste of available resources (such as High Speed Physical Downlink Shared Channel resources) on a base station due to inability to allocate reasonably the available resources on the base station in the related art, the present invention proposes that resources are first allocated to cells based on the minimum amount of resources of the cells under the base station, then the remaining resources are allocated to each cell based on throughput of the cell such that the available resources on the base station can be allocated more reasonably, thereby improving the utilization radio of resources.

The embodiments of the present invention will be described in detail below in combination with the accompanying drawings.

The method embodiment

In the present embodiment, a method for allocating available resources of a base station is provided for allocating the available resources to a plurality of cells under the same base station.

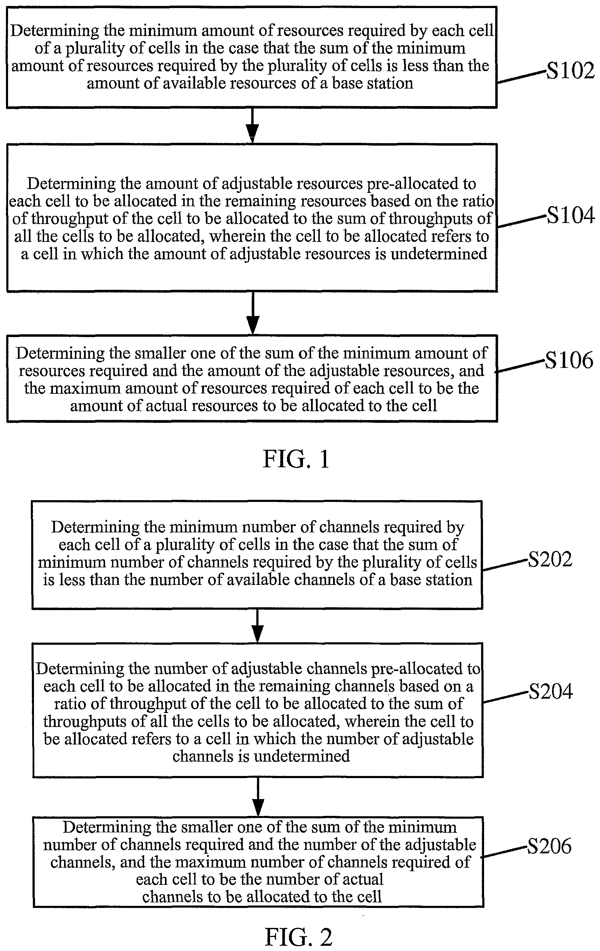

FIG. 1 is a flow chart of a method for allocating available resources of a base station in accordance with the embodiment. As shown in FIG. 1, the method for allocating the available resources of the base station in accordance with the embodiment comprises the following steps.

Step S102, the minimum amount of resources required by each cell of a plurality of cells is determined in the case that the sum of the minimum amounts of resources required by the plurality of cells is less than the amount of available resources of a base station, wherein the available resources of the base station include downlink transmission power resources, CPU processing resources, memory resources, and channel element resources.

Step S104, the amount of adjustable resources pre-allocated to each cell to be allocated in the remaining resources is determined based on the ratio of throughput of the cell to be allocated to the sum of throughputs of all the cells to be allocated, wherein the cell to be allocated refers to a cell in which the amount of adjustable resources is undetermined. For example, if the amount of the resources is 100, and it is determined in step S102 that at least 80 resources are required by all the cells, at this point the amount of the remaining resources is 20, if there are three cells in total, cell 1, cell 2 and cell 3, under the base station, and the ratio of the throughput of cell 1 to the total throughput of the three cells is 50%, then 50% of the remaining resources may be pre-allocated to cell 1 as adjustable resources of cell 1.

Step S106, the smaller one of the sum of the minimum amount of resources required and the amount of the adjustable resources, and the maximum amount of resources required of each cell is determined to be the amount of actual resources to be allocated to the cell. Specifically, for each cell, both the maximum amount of the required resources and the minimum amount of the required resources are obtainable. During comparison, the previously obtained amount of the adjustable resources of the cell is required to be added to the minimum amount of the resources required by the cell, and the calculation result is compared with the maximum amount of resources required by the cell.

Through the foregoing processing, the amount of resources intended to be allocated to each cell (namely, the sum of the minimum amount of resources required by the cell and the amount of adjustable resources of the cell) can be determined based on a relationship between throughputs of the cells, and the amount of actual resources finally allocated can be determined based on the maximum amount of resources required by each cell so as to prevent resources from lying idle due to excessive allocation of resources to some of the cells, and allocate the adjustable resources as many as possible to each cell based on the throughput of each cell on the premise of guaranteeing that each cell can acquire the minimum amount of the required resources, thus improving the utilization radio of resources of the base station efficiently.

The specific implementation procedure of the foregoing processing will be described in detail below.

When step S104 is performed, the plurality of cells may be ordered first in a descending order of guaranteed bit rate (GBR). During the ordering, the cells with the same GBR may be further ordered according to parameters, such as the maximum bit rate (MBR), the minimum number of the required channels, the maximum number of the required channels of the cells, etc. For example, assuming that there are cell 1, cell 2, cell 3, and cell 4 under one base station, the GBR of cell 1 equals to the GBR of cell 2, and equals to the GBR of cell 3, and the GBR of cell 1, cell 2, and cell 3 is greater than the GBR of cell 4, at this point, it can be determined that cell 1, cell 2, and cell 3 are in front of cell 4. Preferably, cell 1, cell 2, and cell 3 may be ordered according to the MBRs of the three cells. Assuming that the MBR of cell 1 is greater than the MBR of cell 2, and the MBR of cell 2 equals to the MBR of cell 3, at this point, it can be determined that cell 1 is the first one of the four cells; cell 2 and cell 3 may be ordered according to the minimum number of channels required by the two cells; if the minimum number of channels required by cell 2 and cell 3 are the same, they may be ordered according to the maximum number of channels required by cell 2 and cell 3.

After ordering, the amount of adjustable resources of each cell can be determined in turn for the plurality of cells one by one.

Specifically, the sum of the amount of adjustable resources and the minimum amount of resources required of each cell to be allocated may be determined one by one according to the following formula:

$$MaxRsource_i = MinRsource_i + ceil(Resource \times \frac{HsUserNum_i}{\sum\limits_{j=i}^{N} HsUserNum_j}),$$

where $MaxResource_i$ is the sum of the amount of adjustable resources and the minimum amount of resources required of the $i^{th}$ cell of the plurality of cells, Ceil is a round up function, $MinResource_i$ is the minimum amount of resources required by the $i^{th}$ cell, $Resource$ is the amount of resources which are not pre-allocated presently in the remaining resources under the base station, $HsUserNum_i$ is the number of users needing to use available resources of the base station in the $i^{th}$ cell, and $N$ is the total number of the plurality of cells, $j = i,...,N..$

Or, the sum of the amount of the adjustable resources and the minimum amount of the resources required of each cell may be determined one by one according to the following formula:

$$MaxRsource_i = MinRsource_i + ceil(Resource \times \frac{HsGBR_i}{\sum\limits_{j=i}^{N} HsGBR_j}),$$

where $HsGBR_i$ is the guaranteed bit rate of the $i^{th}$ cell.

When the amount of actual resources is determined, the maximum amount of resources required by each cell is required to be compared with the sum of the amount of the adjustable resources and the minimum amount of the required resources, the smaller one of which is determined to be the amount of the actual resources allocated to each cell, so as to avoid allocation of excessive resources to the cell (exceeding the maximum amount of resources required by the cell), thus affecting allocation of resources to other cells.

In the aforementioned formula, when the parameter $Resource$ of the $i^{th}$ cell is determined, the allocated resources are required to be deleted from the total resources before the resources are allocated to the $i^{th}$ cell to obtain the value of $Resource.$ That is, when the sum of the amount of the adjustable resources and the minimum amount of the required resources of the first cell is determined, the difference between the total amount of resources of the base station and the minimum amount of resources required by all the cells is taken as $Resource$; and when the sum of the adjustable resources and the minimum amount of the required resources of the second cell is determined, the sum of the minimum amounts of the resources required by all the cells (including the second cell) is subtracted from the total amount of the resources of the base station, and the amount of the adjustable resources of the first cell is subtracted, and then the obtained value is taken as $Resource.$

Specifically, assuming that there are 100 resources in one base station, and there are three cells under the base station, when the amount of the adjustable resources of the first cell is determined, 100 is required to be substituted into $Resource$, $j$=3, that is, the ratio of $HsGBR$ or $HsUserNum$ of the first cell to the sum of $HsGBRs$ or $HsUserNums$ of the three cells is determined. Assuming that the sum of the amount of the adjustable resources and the minimum amount of the required resources of the first cell is 40, and the maximum amount of resources required by the first cell 1 is 50, the smaller one of 40 and 50 is taken as the amount of actual resources of the first cell. When the amount of resources of the second cell is determined, the result of 100-40 (that is, 60) is required to be substituted into $Resource$, at this point $j$=2, that is, the ratio of $HsGBR$ or $HsUserNum$ of the second cell to the sum of $HsGBRs$ or $HsUserNums$ of the second cell and the third cell is required to be calculated to obtain the amount of the adjustable resources of the second cell, and the amount of actual resources of the second cell is determined based on the maximum amount of resources required by the second cell, and so on.

The embodiment of the present invention will be described in detail by taking the High Speed Physical Downlink Shared Channel resources as example.

According to the embodiment of the present invention, a method for allocating channels is also provided for allocating the HS-PDSCHs to a plurality of cells under the same base station.

As shown in FIG. 2, the method for allocating channels in accordant with the embodiment of the present invention comprises the following steps.

Step S202, the minimum number of channels required by each cell of a plurality of cells is determined in the case that the sum of minimum numbers of channels required by the plurality of cells is less than the number of available channels of a base station.

Step S204, the number of adjustable channels pre-allocated to each cell to be allocated in the remaining channels is determined based on the ratio of throughput of the cell to be allocated to the sum of throughputs of all the cells to be allocated, wherein the cell to be allocated refers to a cell in which the number of adjustable channels is undetermined. For example, if the number of the channels is 100, and it is determined in step S202 that at least 80 channels are required by all the cells, at this point the number of the remaining channels is 20.

Step S106, the smaller one of the sum of the minimum number of channels required and the number of the adjustable channels, and the maximum number of channels required of each cell is determined to be the number of actual channels to be allocated to the cell. Specifically, for each cell, both the maximum number of the required channels and the minimum number of the required channels are obtainable. During comparison, the previously obtained number of the adjustable channels of the cell is required to be added to the minimum number of channels required by the cell, and the calculation result is compared with the maximum number of channels required by the cell.

Similarly, when the number of the adjustable channels of each cell is determined, the plurality of cells are required to be ordered in a descending order of GBR of the plurality of cells; afterwards, the number of the adjustable channels of each cell is determined in turn one by one according to the order of the plurality of cells. If the order of the cells cannot be determined according to the MBR only, the cells can be further ordered according to parameters, such as the maximum bit rate, the minimum number of the required channels, the maximum number of the required channels of the cells, etc. The specific process has been described previously and will not be repeated here.

Specifically, the sum of the minimum number of channels required and the number of adjustable channels of each cell may be determined one by one according to the following formula:

$$MaxHsNum_i = MinHsNum_i + ceil(HsNum \times \frac{HsUserNum_i}{\sum_{j=i}^{N} HsUserNum_j}),$$

where $MaxHsNum_i$ is the sum of the minimum number of channels required and the number of adjustable channels of the $i^{th}$ cell of the plurality of cells, Ceil is a round up function, $MinHsNum_i$ is the minimum number of channels required by the $i^{th}$ cell, $HsUserNum_i$ is the number of users of the High Speed Physical Downlink Shared Channels in the $i^{th}$ cell, $HsNum$ is the number of channels which are not pre-allocated presently in the remaining channels under the base station, and $N$ is the total number of the plurality of cells, $j = i,...,N$.

Or, the sum of the minimum number of channels required and the number of the adjustable channels of each cell may be determined one by one according to the following formula:

$$MaxHsNum_i = MinHsNum_i + ceil(HsNum \times \frac{HsGBR_i}{\sum_{j=i}^{N} HsGBR_j}),$$

where $HsGBR_i$ is the guaranteed bit rate of the $i^{th}$ cell, and $N$ is the total number of the plurality of cells, $j = i,...,N$.

In the case that the total number of available channels of the base station is greater than the number of actual channels of the plurality of cells, the remaining channels are required to be allocated to all or some of the plurality of cells, wherein the channels allocated starting from the first cell of the plurality of the ordered cells, one channel being allocated to each cell; and after allocation to the plurality of cells is completed, if there are still unallocated channels, the channels continues to be allocated to the first cell of the ordered cells, until all the remaining channels have been allocated so as to guarantee the maximum utilization radio of channel resources.

For example, assuming that there are three cells, i.e., cell 1, cell 2 and cell 3, ordered in a descending order of GBR. After the number of their respective actual channels is determined, five channels remain, at this point, the five channels are required to be allocated to the three cells, two channels are allocated to cell 1, two channels are also allocated to cell 2, and only one channel is allocated to cell 3. If four channels remain after the number of the respective actual channels is determined, two channels are allocated to cell 1, only one channel is allocated to cell 2 and cell 3, respectively. If three channels remain after the number of the respective actual channels is determined, only one channel is allocated the three cells, respectively.

The method for allocating channels in accordant with the embodiment of the present invention will be described below in combination with the accompanying drawings.

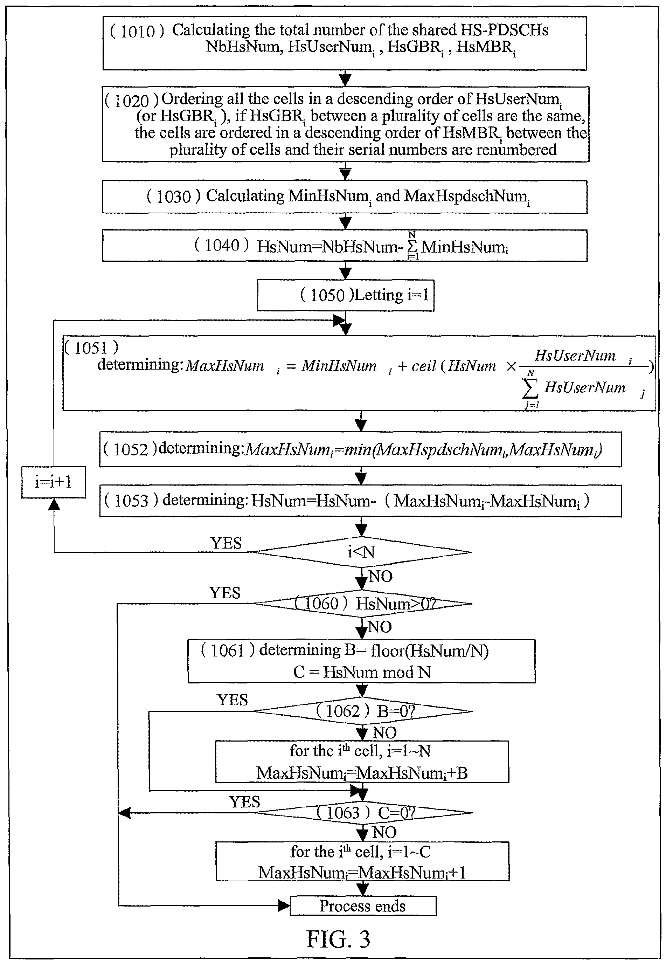

FIG. 3 is a detail processing flow chart of a method for allocating channels in accordance with the embodiment. As shown in FIG. 3, the method for allocating channels in accordance with the embodiment specifically comprises the following steps.

Step S1010, the total number $NbHsNum$ of HS-PDSCHs shared by each cell under control of the same base station, the number $HsUserNum_i$ of users of HSDPA in different cells (or the sum $HsGBR_i$ of GBRs of HSDPA services of all the users), s $HsMBR_i$ of the maximum bit rate (MBRs) of the HSDPA services in different cells are calculated, where $i$ is a cell serial number, $i=1 \sim N$, and $N$ is the number of the cells sharing the HS-PDSCHs.

Step S1020, all the cells are ordered in a descending order of $HsUserNum_i$ (or $HsGBR_i$), if $HsGBR_i$ between a plurality of cells are the same, the cells are ordered in a descending order of $HsMBR_i$ between the plurality of cells and their serial numbers are renumbered.

Step S1030, the minimum number $MinHsNum_i$ and the maximum number $MaxHspdschNum_i$ of HS-PDSCHs required by HSPDA services of each cell are calculated.

Step S1040, the sum $MinHsNumSum$ of the minimum numbers of HS-PDSC channels required by all the cells is subtracted from $HsTotalNum$ to obtain $HsNum$ (i.e., the initial value of the number of the remaining channels, at this point all of the remaining channels are not pre-allocated):

$$HsNum = NbHsNum - \sum_{i=1}^{N} MinHsNum_i \qquad \text{Formula (1)}$$

Step S1050, let $i=1$, the following steps are executed for each cell.

Step S1051, the maximum number $MaxHsNum_i$ of the HS-PDSCHs is determined for the $i^{th}$ cell based on the ratio of $HsUserNum_i$ of the $i^{th}$ cell to the sum of $HsUserNum_i$s of all the cells (or the ratio of the $HsGBR_i$ of the $i^{th}$ cell to the sum of $HsGBR_i$s of all the cells), that is, the sum of the minimum number of channels required and the number of adjustable channels of the $i^{th}$ cell:

$$MaxHsNum_i = MinHsNum_i + ceil(HsNum \times \frac{HsUserNum_i}{\sum_{j=i}^{N} HsUserNum_j})$$

or,

$$MaxHsNum_i = MinHsNum_i + ceil(HsNum \times \frac{HsGBR_i}{\sum_{i=i}^{N} HsGBR_j}) \qquad \text{Formula (2)}$$

where ceil represents rounding up.

Step S1052, $MaxHsNum_i$ calculated in the Formula (2) is compared with $MaxHspdschNum_i$ and reassign the smaller one to $MaxHsNum_i$ to obtain the number of actual channels.

$$MaxHsNum_i = \min(MaxHspdschNum_i, MaxHsNum_i) \qquad \text{Formula (3)}$$

Step S1053, $MaxHsNum_i$ in the Formula (3) is subtracted from $HsNum$ to get:

$$HsNum = HsNum - (MaxHsNum_i + MinHsNum_i) \qquad \text{Formula (4)}$$

If $i<N$, step S1051 is performed for the next cell (namely, the $(i+1)^{th}$ cell); otherwise step S1060 is performed.

Step S1060, if $HsNum = 0$, it is shown that all of the HS-PDSCHs have already been allocated, and the process ends; otherwise, it is shown that there are remaining HS-PDSCHs which are not fully utilized, and step S1061 is performed.

Step S1061, $B=$ floor($HsNum/N$) and $C = HsNum$ mod $N$ are calculated, and floor() represents rounding down.

Step S1062, whether B equals to 0 is determined, if yes, then step S1063 is performed; otherwise for the $i^{th}$ cell, where $i = 1 \sim N$, B is added to the maximum number of the HS-PDSCHs of each cell.

$MaxHsNum_i = MaxHsNum_i + B$, $i = 1 \sim N$, then step S1063 is performed.

Step S1063, whether $C$ equals to 0 is determined, if yes, then the process ends; otherwise, for the first $C$ cells of all the ordered cells, one is added to the maximum number of the HS-PDSCHs of each cell:

$$MaxHsNum_i = MaxHsNum_i + 1, \qquad i = 1 \sim C.$$

The specific values will be assigned to parameters of each cell under the base station hereinafter, and the process for allocating channels will be described.

Before channels are allocated, the following assumptions are made first.

(1) There are three cells sharing the HS-PDSCHs under the base station, and the total number of the shared HS-PDSCHs is *HsTotalNum*=25.

(2) The numbers of users of the HSDPA in cell 1, cell 2 and cell 3 are $HsUserNum_1$=10, $HsUserNum_2$=10, $HsUserNum_3$=5, respectively.

(3) The sums of GBRs of HSDPA services in cell 1, cell 2 and cell 3 are $HsGBR_1$=200kbps, $HsGBR_2$=200kbps, $HsGBR_3$=100kbps, respectively.

(4) The sums of MBRs of HSDPA services in cell 1, cell 2 and cell 3 are $HsMBR_1$=6Mbps, $HsMBR_2$=5Mbps, $HsMBR_3$=4Mbps, respectively.

(5) The minimum numbers of HS-PDSCHs required by cell 1, cell 2 and cell 3 are $MinHsNum_1$=2, $MinHsNum_2$=2, $MinHsNum_3$=1, respectively.

(6) The maximum numbers of HS-PDSCHs required by cell 1, cell 2 and cell 3 are $MaxHspdchNum_1$=6, $MaxHspdchNum_2$=4, $MaxHspdchNum_3$=2, respectively.

The process of allocating channels in accordant with the present invention comprises the following steps.

(1) The plurality of cells are ordered according to the sum of GBRs of all the cells (or further according to the sum of MBRs). Since $HsGBR_1$=$HsGBR_2$>$HsGBR_3$ and $HsMBR_1$>$HsMBR_2$, the maximum number of the HS-PDSCHs are set for each cell in the order of cell 1, cell 2 and cell 3.

(2) The sum of *MinHsNums* of all the cells is subtracted from *HsTotalNum*: $HsNum = HsTotalNum - MinHsNum_1 - MinHsNum_2 - MinHsNum_3 = 20$.

(3) For cell 1, the maximum number of the HS-PDSCHs in cell 1 (namely, the sum of the minimum number of channels required and the number of adjustable channels of cell 1) is calculated based on the ratio of the number $HsUserNum_1$ of users of HSDPA in cell 1 (or the sum $HSGBR_1$ of GBRs of the HSDPA services) to the sum of users of HSDPA in the three cells (or the sum of GBRs of the HSDPA services of the three cells),

$$MaxHsNum_1 = MinHsNum_1 + ceil(HsNum \times \frac{HsUserNum_1}{\sum_{j=1}^{3} HsUserNum_j}) = 10 \ .$$

(4) Since the maximum number of the HS-PDSCHs required by cell 1 is $MaxHspdschNum_1 = 6$, the smaller one of $MaxHspdschNum_1$ and $MaxHsNum_1$ is assigned to $MaxHsNum_1$ $MaxHsNum_1 = 6$, (that is, the number of the actual channels allocated actually to cell 1 should be 6).

(5) $MaxHsNum_1$ is subtracted from *HsNum*: $HsNum = HsNum - (MaxHsNum_1 - MinHsNum_1) = 20 - (6 - 2) = 16$.

(6) For cell 2, the maximum number of HS-PDSCHs in cell 2 (namely, the sum of the minimum number of channels required and the number of adjustable channels of cell 2) is calculated based on the ratio of the number $HsUserNum_2$ of users of HSDPA in cell 2 (or, the sum $HsGBR_2$ of GBRs of the HSDPA services) to the total number ($HsUserNum_2$ + $HsUserNum_3$) of users of HSDPA in the remaining two cells (that is, cell 2 and cell 3) (or, the sum of GBRs of the HSDPA services of cell 2 and cell 3). Since 6-2 = 4 (the difference between the maximum number $MaxHsNum_1$ of channels of cell 1 and the minimum number of channels required by cell 1) adjustable channels are allocated previously to cell 1 from the remaining channels, the number *HsNum* of the channels which are not pre-allocated in the remaining channels equals to 20-4=16,

$$MaxHsNum_2 = MinHsNum_2 + ceil(HsNum \times \frac{HsUserNum_2}{\sum_{j=2}^{3} HsUserNum_j}) = 12 \ .$$

(7) Since the maximum number of the HS-PDSCHs required by cell 2 is $MaxHspdschNum_2 = 4$, the smaller one of

*MaxHspdschNum_2* and *MaxHsNum_2* is assigned to *MaxHsNum_2*: *MaxHsNum_2* = 4, that is, the number of actual channels of cell 2 is 4.

(8) *MaxHsNum_2* is subtracted from *HsNum*: HsNum = HsNum - (*MaxHsNum_2* - *MinHsNum_2*) =16 - (4 - 2) =14.

(9) For cell 3, the maximum number of HS-PDSCHs in cell 3 is calculated based on the ratio of the number *HsUserNum_3* of users of HSDPA in cell 3 (or, the sum *HsGBR_3* of GBRs of the HSDPA services) to the number *HsUserNum_3* of users of HSDPA in the remaining one cell (or, the sum of GBRs of the HSDPA services of cell 3),

$$MaxHsNum_3 = MinHsNum_3 + ceil(HsNum \times \frac{HsUserNum_3}{HsUserNum_3}) = 11 .$$

Since the maximum number of the HS-PDSCHs required by cell 3 is *MaxHspdschNum_3* = 2, the smaller one of *MaxHspdschNum_3* and *MaxHsNum_3* is assigned to *MaxHsNum_3*: *MaxHsNum_3* = 2, that is, the number of actual channels of cell 3 is 2.

*MaxHsNum_3* is subtracted from *HsNum*: HsNum = HsNum - (*MaxHsNum_3* - *MinHsNum_3*) =14 - (2 - 1) =13.

Since *HsNum*>0, the available HS-PDSCHs are not fully utilized, therefore $B = floor(HsNum/3) = 4$ and $C = HsNum$ mod 3 = 1 are calculated.

For cell 1, cell 2 and cell 3, *B* is added to the maximum number of the HS-PDSCHs of each cell to get *MaxHsNum_1*= 6 + 4 = 10, *MaxHsNum_2* = 4 + 4 = 8, and *MaxHsNum_3* = 2 + 4 = 6.

Since *C*=1, where C is greater than 0, one is added to the maximum number of the HS-PDSCHs of cell 1 to get the final *MaxHsNum_1* =10+1=11.

Therefore, the final numbers of the HS-PDSCHs of the three cells are respectively: *MaxHsNum_1* = 11, *MaxHsNum_2* = 8, and *MaxHsNum_3* = 6.

The method is described above by taking allocation of channel resources as an example, and may be used for allocating other available resources on the base station, except that only corresponding parameters in the formulas are required to be substituted. The specific substitutions are well known to those skilled in the art, and will not be repeated herein.

It can be seen that the available resources on the base station (such as, High Speed Physical Downlink Shared Channel resources) can be sufficiently allocated to a plurality of cells based on throughout requirements of the cells under the base station through the processing described above, thereby avoiding the problem of low utilization radio of resources due to insufficient allocation of resources in the related art.

The device embodiment

In the present embodiment, a device for allocating channels is provided. The device may be located in a base station and configured to allocate PDSCHs to a plurality of cells under the base station.

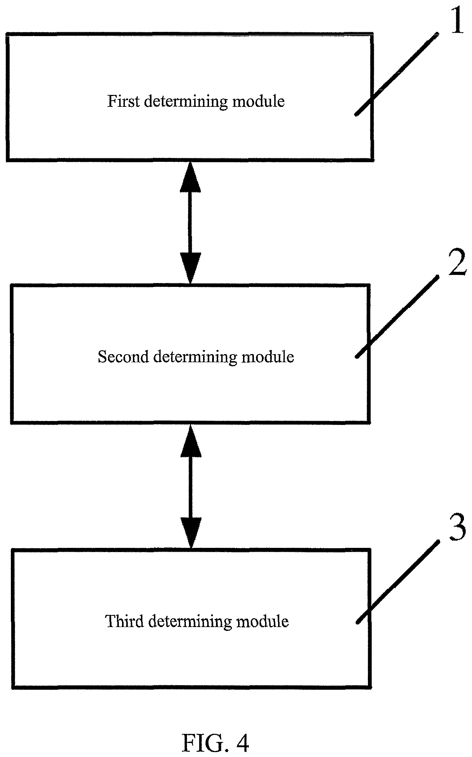

FIG. 4 is a block diagram of a device for allocating channels in accordant with the present embodiment. As shown in FIG. 4, the device for allocating channels in accordant with the present embodiment comprises:

a first determining module 1 configured to determine the minimum number of channels required by each cell of a plurality of cells in the case that the sum of the minimum numbers of channels required by the plurality of cells is less than the number of available channels of a base station;

a second determining module 2 connected to the first determining module 1 and configured to determine the number of adjustable channels pre-allocated to each cell to be allocated in the remaining channels based on the ratio of throughput of the cell to be allocated to the sum of throughputs of all the cells to be allocated, wherein the cell to be allocated refers to a cell in which the number of adjustable channels is undetermined; and

a third determining module 3 connected to the second determining module 2 and configured to, for each cell, determine the smaller one of the sum of the minimum number of channels required and the number of the adjustable channels of the cell, and the maximum number of the channels required by the cell as the number of actual channels to be allocated to the cell.

Specifically, the second determining module 2 can acquire the size of GBRs of the plurality of cells, and orders the plurality of cells in a descending order of GBR, and then determine one by one in turn the sum of the minimum number of channels required and the number of the adjustable channels of the $i^{th}$ cell for the plurality of cells according to the following formula:

$$MaxHsNum_i = MinHsNum_i + ceil(HsNum \times \frac{HsUserNum_i}{\sum\limits_{j=i}^{N} HsUserNum_j}),$$

or

$$MaxHsNum_i = MinHsNum_i + ceil(HsNum \times \frac{HsGBR_i}{\sum\limits_{j=i}^{N} HsGBR_j}),$$

where $MaxHsNum_i$ is the sum of the minimum number of channels required and the number of the adjustable channels of the $i^{th}$ cell of the plurality of cells, Ceil is a round up function, $MinHsNum_i$ is the minimum number of channels required by the $i^{th}$ cell, $HsNum$ is the number of the channels which are not pre-allocated presently in the remaining channels under the base station, $HsGBR_i$ is guaranteed bit rate of the $i^{th}$ cell, and $N$ is the total number of the plurality of cells, $j = i,...,N$.

The device in accordance with the present embodiment can also execute the processing shown in the FIG. 3, the specific procedure of which is described previously in combination with the FIG. 3 and will not be repeated here.

In addition, various modifications to the device may be made by those skilled in the art. For example, the second determining module 2 can be configured to determine the amount of adjustable resources allocated to each cell based on the ratio of throughput of the cell of the plurality of cells to the sum of throughputs of some or all of the plurality of cells and on the minimum amount of resources required by each cell; and the third determining module 3 can be configured to determine the amount of actual resources required to be allocated to each cell based on the sum of the maximum amount of resources required and the amount of adjustable resources of the cell and on the maximum amount of resources required by the cell.

At this point, the second determining module 2 is required to determine one by one the sum of the amount of the adjustable resources of each cell and the minimum amount of the required resources according to the following formula:

$$MaxRsource_i = MinRsource_i + ceil(Resource \times \frac{HsUserNum_i}{\sum\limits_{j=i}^{N} HsUserNum_j}),$$

or,

$$MaxRsource_i = MinRsource_i + ceil(Resource \times \frac{HsGBR_i}{\sum\limits_{j=i}^{N} HsGBR_j}),$$

where $MaxResource_i$ is the sum of the amount of adjustable resources and the minimum amount of resources required of the $i^{th}$ cell of the plurality of cells, Ceil is a round up function,

$MinResource_i$ is the minimum amount of resources required by the $i^{th}$ cell, $Resource$ is the amount of resources which are not pre-allocated presently in the remaining resources under the base station, $HsUserNum_i$ is the number of users needing to use the available resources of the base station in the $i^{th}$ cell, and $N$ is the total number of the plurality of cells, $j = i,...,N$.

Specifically, the resources that can be allocated include downlink transmission power resources, CPU processing resources, memory resources, and channel element resources. The method described above may be used for allocating other resources, except that only corresponding parameters in the formulas are required to be substituted. The specific substitutions will not be repeated herein.

It can be seen that the available resources on the base station (such as, High Speed Physical Downlink Shared Channel resources) can be sufficiently allocated to a plurality of cells based on throughout requirements of the cells under the base station through the processing described above, thereby avoiding the problem of low utilization radio of resources due to insufficient allocation of resources in the related art.

In summary, by means of the technical scheme of the present invention described above, resources are allocated to the cells based on the minimum amount of resources required by the cells under the base station and the remaining resources are allocated to each cell based on throughput of the cell such that the available resources of the base station can be allocated more reasonably, and the resources can be allocated preferentially to cells with higher throughput on the premise of guaranteeing that the sufficient resources are allocated to the cells with lower throughput, thereby improving the utilization radio of resources and avoiding the problem of low utilization radio of resources due to insufficient allocation of resources in the related art.

The above description is only the preferred embodiments of the present invention, and is not intended to limit the present invention.

**Claims**

1. A device for allocating available resources of a base station and configured to allocate the available resources to a plurality of cells under the same base station, **characterized by**, the device comprising:

    a first determining module configured to determine the minimum amount of resources required by each cell of the plurality of cells in the case that the sum of the minimum amount of resources required by the plurality of cells is less than the amount of available resources of the base station;
    a second determining module configured to determine the amount of adjustable resources pre-allocated to each cell to be allocated in the remaining resources based on the ratio of throughput of the cell to be allocated to the sum of throughputs of all the cells to be allocated, wherein the cell to be allocated refers to a cell in which the amount of adjustable resources is undetermined; and
    a third determining module configured to, for each cell, determine the smaller one of the sum of the minimum amount of resources required and the amount of the adjustable resources of the cell, and the maximum amount of the resources required by the cell to be the amount of actual resources to be allocated to the cell.

2. A method for allocating available resources of a base station, which is used for allocating the available resources to a plurality of cells under the same base station, **characterized by**, the method comprising:

    determining the minimum amount of resources required by each cell of the plurality of cells in the case that the sum of the minimum amounts of resources required by the plurality of cells is less than the amount of available resources of the base station (S102);
    determining the amount of adjustable resources pre-allocated to each cell to be allocated in the remaining resources based on the ratio of throughput of the cell to be allocated and the sum of throughputs of all the cells to be allocated, wherein the cell to be allocated refers to a cell in which the amount of adjustable resources is undetermined (S104); and
    for each cell, determining the smaller one of the sum of the minimum amount of resources required and the amount of the adjustable resources of the cell, and the maximum amount of the resources required by the cell to be the amount of actual resources to be allocated to the cell (S106).

3. The method according to claim 2, wherein the determining the amount of the adjustable resources of each cell to be allocated specifically comprises:

    ordering the plurality of cells in a descending order of guaranteed bit rate of the plurality of cells, and
    determining one by one the amount of the adjustable resources of each cell to be allocated according to the order of the plurality of cells.

4. The method according to claim 3, wherein the sum of the amount of the adjustable resources and the minimum amount of the resources required of each cell to be allocated is determined one by one according to the following formula:

$$MaxRsource_i = MinRsource_i + ceil(Resource \times \frac{HsUserNum_i}{\sum_{j=i}^{N} HsUserNum_j}),$$

where $MaxResource_i$ is the sum of the amount of adjustable resources and the minimum amount of resources required of the $i^{th}$ cell of the plurality of cells, Ceil is a round up function, $MinResource_i$ is the minimum amount of resources required by the $i^{th}$ cell, $Resource$ is the amount of resources which are not pre-allocated presently in the remaining resources under the base station, *HsUserNum$_i$* is the number of users needing to use the available resources of the base station in the $i^{th}$ cell, and *N* is the total number of the plurality of cells, *j = i,...,N.*

5. The method according to claim 3, wherein the sum of the amount of the adjustable resources and the minimum amount of the resources required of each cell may be determined one by one according to the following formula:

$$MaxRsource_i = MinRsource_i + ceil\left(Resource \times \frac{HsGBR_i}{\sum_{j=i}^{N} HsGBR_j}\right),$$

where *MaxResource$_i$* is the sum of the amount of adjustable resources and the minimum amount of resources required of the $i^{th}$ cell of the plurality of cells, Ceil is a round up function, *MinResource$_i$* is the minimum amount of resources required by the $i^{th}$ cell, *Resource* is the amount of resources which are not pre-allocated presently in the remaining resources under the base station, *HsGBR$_i$* is guaranteed bit rate of the $i^{th}$ cell, and *N* is the total number of the plurality of cells, *j = i,...,N.*

6. The method according to any one of claims 2 to 5, wherein the available resources of the base station include one of downlink transmission power resources, CPU processing resources, memory resources, and channel element resources.

7. The method according to claim 3, wherein the available resources of the base station comprise channel resources, in the case that the number of the available channels of the base station is greater than the number of actual channels of the plurality of cells, the method further comprises:
allocating the remaining channels in turn, starting from the first cell, to all or some of the plurality of cells according to the order of the plurality of cells, and after allocation to the last cell is completed, if there are still unallocated channels, continuing to allocate the channels to the first cell of the ordered cells, until all the remaining channels have been allocated, wherein the number of the channels allocated to each cell at a time is one.

8. The method according to claim 3, wherein the available resources of the base station comprise channel resources, when the plurality of cells are ordered, cells with the same guaranteed bit rate is further ordered according to at least one of the maximum bit rate of the cell, the minimum number of channels required by the cell, the maximum number of channels required by the cell.

**Patentansprüche**

1. Vorrichtung zur Zuweisung von verfügbaren Ressourcen einer Basisstation und konfiguriert für die Zuweisung der verfügbaren Ressourcen an eine Mehrzahl von Zellen unter derselben Basisstation, **dadurch gekennzeichnet, dass** die Vorrichtung Folgendes umfasst:

ein erstes Bestimmungsmodul, das konfiguriert ist, um die Mindestmenge der von jeder Zelle der Mehrzahl von Zellen benötigten Ressourcen zu bestimmen, in dem Fall, dass die Summe der Mindestmenge der von der Mehrzahl von Zellen benötigten Ressourcen kleiner als die Menge verfügbarer Ressourcen der Basisstation ist;
ein zweites Bestimmungsmodul, das konfiguriert ist, um die Menge von jeder zuzuweisenden Zelle vorab zugewiesenen, einstellbaren Ressourcen in den restlichen Ressourcen basierend auf dem Verhältnis des Durchsatzes der zuzuweisenden Zelle zur Summe der Durchsätze aller zuzuweisenden Zellen zu bestimmen, wobei die zuzuweisende Zelle sich auf eine Zelle bezieht, in der die Menge einstellbarer Ressourcen unbestimmt ist; und
ein drittes Bestimmungsmodul, das konfiguriert ist, um für jede Zelle die kleinere der Summe der Mindestmenge von benötigten Ressourcen und der Menge einstellbarer Ressourcen der Zelle und die Höchstmenge der von der Zelle benötigten Ressourcen zu bestimmen, die die Menge aktueller, der Zelle zuzuweisender Ressourcen sein soll.

2. Verfahren zur Zuweisung von verfügbaren Ressourcen einer Basisstation, das für die Zuweisung verfügbarer Ressourcen an eine Mehrzahl von Zellen unter derselben Basisstation verwendet wird, **dadurch gekennzeichnet, dass** das Verfahren Folgendes umfasst:

Bestimmen der Mindestmenge der von jeder Zelle der Mehrzahl von Zellen benötigten Ressourcen, in dem Fall, dass die Summe der Mindestmengen der von der Mehrzahl von Zellen benötigten Ressourcen kleiner als die Menge verfügbarer Ressourcen der Basisstation (S102) ist;

Bestimmen der Menge von einstellbaren, einer jeder zuzuweisenden Zelle vorab zugewiesenen Ressourcen in den restlichen Ressourcen basierend auf dem Verhältnis des Durchsatzes der zuzuweisenden Zelle und der Summe von Durchsätzen aller zuzuweisenden Zellen, wobei die zuzuweisende Zelle sich auf eine Zelle bezieht, in der die Menge einstellbarer Ressourcen unbestimmt ist (S104); und

Bestimmen, für jede Zelle, der kleineren der Summe der Mindestmenge von benötigten Ressourcen und der Menge der einstellbaren Ressourcen der Zelle und die Höchstmenge der von der Zelle benötigten Ressourcen, die die Menge aktueller, der Zelle zuzuweisender Ressourcen (S106) sein soll.

3. Verfahren nach Anspruch 2, wobei das Bestimmen der Menge der einstellbaren Ressourcen einer jeden zuzuweisenden Zelle insbesondere umfasst:

Ordnen der Mehrzahl von Zellen in einer absteigenden Reihenfolge garantierter Bitraten der Mehrzahl von Zellen und

eineindeutiges Bestimmen der Menge einstellbarer Ressourcen einer jeden zuzuweisenden Zelle entsprechend der Reihenfolge der Mehrzahl von Zellen.

4. Verfahren nach Anspruch 3, wobei die Summe der Menge einstellbarer Ressourcen und der Mindestmenge der von jeder zuzuweisenden Zelle benötigten Ressourcen eineindeutig gemäß der folgenden Formel bestimmt wird:

$$MaxRsource_i = MinRsource_i + ceil(Resource \times \frac{HsUserNum_i}{\sum_{j=i}^{N} HsUserNum_j}),$$

wobei $MaxResource_i$ die Summe der Menge einstellbarer Ressourcen und der Mindestmenge der von der $i^{ten}$ Zelle der Mehrzahl von Zellen benötigten Ressourcen ist, Ceil eine Aufrundfunktion ist, $MinResource_i$ die Mindestmenge der von der $i^{ten}$ Zelle benötigten Ressourcen ist, $Resource$ die Menge von Ressourcen ist, die aktuell nicht in den restlichen Ressourcen unter der Basisstation vorab zugewiesen sind, $HsUserNum_i$ die Anzahl von Benutzern ist, die die verfügbaren Ressourcen der Basisstation in der $i^{ten}$ Zelle benutzen müssen und $N$ die Gesamtzahl der Mehrzahl von Zellen ist, $j = i,...,N$.

5. Verfahren nach Anspruch 3, wobei die Summe der Menge einstellbarer Ressourcen und der Mindestmenge der von jeder Zelle benötigten Ressourcen eineindeutig gemäß der folgenden Formel bestimmt werden kann:

$$MaxRsource_i = MinRsource_i + ceil(Resource \times \frac{HsGBR_i}{\sum_{j=i}^{N} HsGBR_j}),$$

wobei $MaxResource_i$ die Summe der Menge einstellbarer Ressourcen und der Mindestmenge der von der $i^{ten}$ Zelle der Mehrzahl von Zellen benötigten Ressourcen ist, Ceil eine Aufrundfunktion ist, $MinResource_i$ die Mindestmenge der von der $i^{ten}$ Zelle benötigten Ressourcen ist, $Resource$ die Menge von Ressourcen ist, die aktuell nicht in den restlichen Ressourcen unter der Basisstation vorab zugewiesen sind, $HsGBR_i$ die garantierte Bitrate der $i^{ten}$ Zelle ist und $N$ die Gesamtzahl der Mehrzahl von Zellen ist, $j = i,...,N$.

6. Verfahren nach einem der Ansprüche 2 bis 5, wobei die verfügbaren Ressourcen der Basisstation eine aus Downlink-Sendeleistungsressourcen, CPU-Verarbeitungsressourcen, Speicherressourcen und Kanalelementressourcen umfassen.

7. Verfahren nach Anspruch 3, wobei die verfügbaren Ressourcen der Basisstation Kanalressourcen umfassen und in dem Fall, dass die Zahl der verfügbaren Kanäle der Basisstation größer als die Zahl der aktuellen Kanäle der Mehrzahl von Zellen ist, umfasst das Verfahren weiter Folgendes:

nacheinander Zuweisen der restlichen Kanäle, angefangen von der ersten Zelle, an alle oder einige der Mehrzahl von Zellen entsprechend der Reihenfolge der Mehrzahl von Zellen und nach abgeschlossener Zuweisung der letzten Zelle - sofern noch nicht zugewiesene Kanäle vorhanden sind - Fortsetzen der Zuweisung der Kanäle an die erste Zelle der geordneten Zellen bis alle restlichen Kanäle zugewiesen sind, wobei die Zahl der einer jeden Zelle gleichzeitig zugewiesenen Kanäle eins ist.

8. Verfahren nach Anspruch 3, wobei die verfügbaren Ressourcen der Basisstation Kanalressourcen umfassen, wenn die Mehrzahl von Zellen geordnet sind, werden Zellen mit derselben garantierten Bitrate nach wenigstens einem aus Höchstbitrate der Zelle, Mindestzahl der von der Zelle benötigten Kanäle, Höchstzahl der von der Zelle benötigten Kanäle geordnet.

**Revendications**

1. Dispositif d'affectation de ressources disponibles d'une station de base et configuré pour affecter les ressources disponibles à une pluralité de cellules sous la même station de base, **caractérisé en ce que** le dispositif comprend :

   un premier module de détermination configuré pour déterminer la quantité minimale de ressources exigées par chaque cellule de la pluralité de cellules dans le cas où la somme de la quantité minimale de ressources exigées par la pluralité de cellules est inférieure à la quantité de ressources disponibles de la station de base ;
   un deuxième module de détermination configuré pour déterminer la quantité de ressources réglables pré-affectées à chaque cellule destinée à l'affectation dans les ressources restantes sur la base du rapport entre le débit de la cellule destinée à l'affectation et la somme de débits de toutes les cellules destinées à l'affectation, dans lequel la cellule destinée à l'affectation se réfère à une cellule dans laquelle la quantité de ressources réglables est indéterminée ; et
   un troisième module de détermination configuré pour, pour chaque cellule, déterminer la plus petite entre la somme de la quantité minimale de ressources exigées et de la quantité des ressources réglables de la cellule et la quantité maximale des ressources exigées par la cellule pour qu'elle soit la quantité de ressources effectives à affecter à la cellule.

2. Procédé d'affectation de ressources disponibles d'une station de base, qui est utilisé pour affecter les ressources disponibles à une pluralité de cellules sous la même station de base, **caractérisé en ce que** le procédé comprend :

   la détermination de la quantité minimale de ressources exigées par chaque cellule de la pluralité de cellules dans le cas où la somme des quantités minimales de ressources exigées par la pluralité de cellules est inférieure à la quantité de ressources disponibles de la station de base (S102) ;
   la détermination de la quantité de ressources réglables pré-affectées à chaque cellule destinée à l'affectation dans les ressources restantes sur la base du rapport entre le débit de la cellule destinée à l'affectation et la somme de débits de toutes les cellules destinées à l'affectation, dans lequel la cellule destinée à l'affectation se réfère à une cellule dans laquelle la quantité de ressources réglables est indéterminée (S104) ; et
   pour chaque cellule, la détermination de la plus petite entre la somme de la quantité minimale de ressources exigées et de la quantité des ressources réglables de la cellule et la quantité maximale des ressources exigées par la cellule pour qu'elle soit la quantité de ressources effectives à affecter à la cellule (S106).

3. Procédé selon la revendication 2, dans lequel la détermination de la quantité des ressources réglables de chaque cellule destinée à l'affectation comprend spécifiquement :

   le classement de la pluralité de cellules dans un ordre décroissant de débit binaire garanti de la pluralité de cellules, et
   la détermination une par une de la quantité des ressources réglables de chaque cellule destinée à l'affectation en fonction du classement de la pluralité de cellules.

4. Procédé selon la revendication 3, dans lequel la somme de la quantité des ressources réglables et de la quantité minimale des ressources exigées de chaque cellule destinée à l'affectation est déterminée une par une selon la formule suivante :

$$MaxRsource_i = MinRsource_i + ceil\left(Resource \times \frac{HsUserNum_i}{\sum_{j=1}^{N} HsUserNum_j}\right),$$

où *MaxResource*$_i$ est la somme de la quantité de ressources réglables et de la quantité minimale de ressources exigées de l'$i^{ème}$ cellule de la pluralité de cellules, Ceil est une fonction d'arrondi, *MinResource*$_i$ est la quantité minimale de ressources exigées par l'$i^{ème}$ cellule, *Resource* est la quantité de ressources qui ne sont pas pré-affctèes actuellement dans les ressources restantes sous la station de base, *HsUserNum*$_j$ est le nombre d'utilisateurs nécessitant l'utilisation des ressources disponibles de la station de base dans l'$i^{ème}$ cellule, et N est le nombre total de la pluralité de cellules, $j = i,...,N$.

5.  Procédé selon la revendication 3, dans lequel la somme de la quantité des ressources réglables et de la quantité minimale des ressources exigées de chaque cellule peut être déterminée une par une selon la formule suivante :

$$MaxRsource_i = MinRsource_i + ceil\left(Resource \times \frac{HsGBR_i}{\sum_{j=i}^{N} HsGBR_j}\right),$$

où *MaxResource*$_i$ est la somme de la quantité de ressources réglables et de la quantité minimale de ressources exigées de l'$i^{ème}$ cellule de la pluralité de cellules, Ceil est une fonction d'arrondi, *MinResource*$_i$ est la quantité minimale de ressources exigées par l'$i^{ème}$ cellule, *Resource* est la quantité de ressources qui ne sont pas pré-affectées actuellement dans les ressources restantes sous la station de base, *HsGBR*$_i$ est le débit binaire garanti de l'$i^{ème}$ cellule, et N est le nombre total de la pluralité de cellules, $j = i,...,N$.

6.  Procédé selon l'une quelconque des revendications 2 à 5, dans lequel les ressources disponibles de la station de base comprennent une parmi des ressources de puissance de transmission de liaison descendante, des ressources de traitement de CPU, des ressources de mémoire et des ressources d'éléments de canal.

7.  Procédé selon la revendication 3, dans lequel les ressources disponibles de la station de base comprennent des ressources de canaux, dans le cas où le nombre des canaux disponibles de la station de base est supérieur au nombre de canaux effectifs de la pluralité de cellules, le procédé comprend en outre :
    l'affectation des canaux restants tour à tour, en partant de la première cellule, à la totalité ou certaines de la pluralité de cellules en fonction du classement de la pluralité de cellules et, après que l'affectation à la dernière cellule est terminée, s'il existe encore des canaux non affectés, la poursuite de l'affectation des canaux à la première cellule des cellules classées, jusqu'à ce que tous les canaux restants aient été affectés, dans lequel le nombre des canaux affectés à chaque cellule à chaque fois est un.

8.  Procédé selon la revendication 3, dans lequel les ressources disponibles de la station de base comprennent des ressources de canaux, quand la pluralité de cellules est classée, des cellules avec le même débit binaire garanti est classée en outre en fonction d'au moins un parmi le débit binaire maximal de la cellule, le nombre minimal de canaux exigés par la cellule, le nombre maximale de canaux exigés par la cellule.

Determining the minimum amount of resources required by each cell of a plurality of cells in the case that the sum of the minimum amount of resources required by the plurality of cells is less than the amount of available resources of a base station ⌐S102

Determining the amount of adjustable resources pre-allocated to each cell to be allocated in the remaining resources based on the ratio of throughput of the cell to be allocated to the sum of throughputs of all the cells to be allocated, wherein the cell to be allocated refers to a cell in which the amount of adjustable resources is undetermined ⌐S104

Determining the smaller one of the sum of the minimum amount of resources required and the amount of the adjustable resources, and the maximum amount of resources required of each cell to be the amount of actual resources to be allocated to the cell ⌐S106

## FIG. 1

Determining the minimum number of channels required by each cell of a plurality of cells in the case that the sum of minimum number of channels required by the plurality of cells is less than the number of available channels of a base station ⌐S202

Determining the number of adjustable channels pre-allocated to each cell to be allocated in the remaining channels based on a ratio of throughput of the cell to be allocated to the sum of throughputs of all the cells to be allocated, wherein the cell to be allocated refers to a cell in which the number of adjustable channels is undetermined ⌐S204

Determining the smaller one of the sum of the minimum number of channels required and the number of the adjustable channels, and the maximum number of channels required of each cell to be the number of actual channels to be allocated to the cell ⌐S206

## FIG. 2

( 1010 ) Calculating the total number of the shared HS-PDSCHs
NbHsNum, $HsUserNum_i$ , $HsGBR_i$ , $HsMBR_i$

↓

( 1020 ) Ordering all the cells in a descending order of $HsUserNum_i$
(or $HsGBR_i$ ), if $HsGBR_i$ between a plurality of cells are the same,
the cells are ordered in a descending order of $HsMBR_i$ between the
plurality of cells and their serial numbers are renumbered

↓

( 1030 ) Calculating $MinHsNum_i$ and $MaxHspdschNum_i$

↓

( 1040 ) $HsNum = NbHsNum - \sum_{i=1}^{N} MinHsNum_i$

↓

( 1050 )Letting i=1

↓

( 1051 )
determining: $MaxHsNum_i = MinHsNum_i + ceil\left(HsNum \times \dfrac{HsUserNum_i}{\sum_{j=i}^{N} HsUserNum_j}\right)$

↓

( 1052 )determining: $MaxHsNum_i = min(MaxHspdschNum_i, MaxHsNum_i)$

↓

i=i+1

( 1053 ) determining: $HsNum = HsNum - (MaxHsNum_i - MaxHsNum_i)$

YES ← i<N

↓ NO

YES ← ( 1060 ) HsNum>0?

↓ NO

( 1061 ) determining B= floor(HsNum/N)
C = HsNum mod N

YES ← ( 1062 ) B=0?

↓ NO

for the $i^{th}$ cell, i=1~N
$MaxHsNum_i = MaxHsNum_i + B$

YES ← ( 1063 ) C=0?

↓ NO

for the $i^{th}$ cell, i=1~C
$MaxHsNum_i = MaxHsNum_i + 1$

↓

Process ends

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008259863 A1, Zhang